(19) **Europäisches Patentamt**

**European Patent Office**

**Office européen des brevets**

(11) **EP 0 742 459 B1**

(12) **FASCICULE DE BREVET EUROPEEN**

(45) Date de publication et mention
de la délivrance du brevet:
**02.01.2003 Bulletin 2003/01**

(51) Int Cl.⁷: **G02B 26/08**, G02B 7/02

(21) Numéro de dépôt: **96401011.0**

(22) Date de dépôt: **10.05.1996**

(54) **Composants microoptiques et microdéflecteurs optomécaniques à déplacement de microlentilles**

Optomechanischer Mikro-Strahlablenker unter Verwendung der Verschiebung von Mikrolinsen

Optomechanical microdeflector using the displacement of microlenses

(84) Etats contractants désignés:
**CH DE FR GB IT LI**

(30) Priorité: **12.05.1995 FR 9505652**

(43) Date de publication de la demande:
**13.11.1996 Bulletin 1996/46**

(73) Titulaire: **COMMISSARIAT A L'ENERGIE ATOMIQUE**
**75015 Paris (FR)**

(72) Inventeurs:
• **Rabarot, Marc**
**38170 Seyssinet (FR)**
• **Molva, Engin**
**38000 Grenoble (FR)**
• **Ollier, Eric**
**38000 Grenoble (FR)**

(74) Mandataire: **Moutard, Pascal Jean et al**
**Brevatome,**
**3, Rue du Docteur Lancereaux**
**75008 Paris (FR)**

(56) Documents cités:
**EP-A- 0 289 449        WO-A-91/06022**
**WO-A-92/02837        US-A- 4 385 373**
**US-A- 5 257 279**

• **PATENT ABSTRACTS OF JAPAN vol. 10, no. 266 (P-496), 11 Septembre 1986 & JP-A-61 091620 (HITACHI), 9 Mai 1986,**
• **PATENT ABSTRACTS OF JAPAN vol. 014, no. 092 (P-1009), 20 Février 1990 & JP-A-01 300433 (FUJI ELELCTROCHEM CO LTD), 4 Décembre 1989,**
• **OPTICAL ENGINEERING, vol. 33, no. 11, 1 Novembre 1994, pages 3616-3623, XP000475105 MOTAMEDI M E ET AL: "MINIATURIZED MICRO-OPTICAL SCANNERS"**

**Description**

Domaine technique

L'invention se rapporte au domaine des composants microoptiques et des microtechnologies, notamment des microdéflecteurs optomécaniques, en vue de la fabrication collective de microsystèmes compacts. L'invention trouve application dans le domaine des microtélémètres lasers (microlidars), des systèmes d'impression optique (marquage laser), des systèmes de communication et d'interconnexion optique, de stockage optique de l'information et des capteurs optiques.

En particulier, l'invention vise les applications de balayage à une ou deux dimensions ou de déflexion d'un faisceau lumineux issu d'une source proche à l'aide d'un système afocal ou d'une autre combinaison de microlentilles dont au moins une est commandée par une ou plusieurs micropoutres à commande électrostatique.

Etat de la technique

Les dispositifs de déflexion mettant en oeuvre des réseaux de microlentilles sont décrits par exemple dans l'article de E. A. Watson intitulé "Analysis of beam steering with decentered microlens array" paru dans OPTICAL ENGINEERING, novembre 1993, vol. 32, n° 11, page 2665-2670, dans l'article de M.E. Motamedi intitulé "Miniaturized micro-optical scanners" paru dans OPTICAL ENGINEERING, novembre 1994, n°11, pages 3616-3623 ainsi que dans l'article de T. D. Milster et al., paru dans SPIE, vol. 1625, Design, Modeling, and Control of Laser Beam Optics (1992), pages 78 à 83. Dans les systèmes décrits dans ces documents, on utilise la déviation provoquée par un désalignement de l'axe optique d'un système mobile de microlentilles ou de réseaux de microlentilles.

Les systèmes connus de microdéflecteurs de faisceaux lasers peuvent également comporter un moteur de déplacement, tel qu'un élément piézoélectrique.

Une monture optique miniaturisée permettant de déplacer une lentille selon trois axes à l'aide de poutres élastiques est divulguée dans le document WO 92/02837.

Cependant, on ne dispose pas, à l'heure actuelle, de dispositif microdéflecteur permettant un degré d'intégration élevé.

Le problème de l'intégration poussée conduit à un autre problème, qui est celui de trouver des composants permettant une telle intégration d'un système microdéflecteur.

Par ailleurs, les dispositifs connus présentent un volume relativement important, et la dimension et la masse des composants peuvent les rendre sensible à l'environnement, ce qui, pour des microtélémètres lasers embarqués, peut s'avérer très problématique. C'est en particulier le cas des miroirs torsionnels vis-à-vis de l'accélération : en effet, le principe de balayage utilise alors la capacité de résonance d'une lame réfléchissante de faible masse et, en contrepartie, la lame est sensible aux perturbations extérieures.

Exposé de l'invention

L'invention a tout d'abord pour premier objet de proposer des composants microoptiques de base, permettant notamment l'intégration de systèmes optiques.

En particulier, un premier objet de l'invention est un composant microoptique tel que défini dans la revendication 1.

Selon un mode particulier de réalisation, des moyens sont prévus pour la commande électrostatique du déplacement de la micropoutre ; ces moyens sont par exemple déposés le long de la micropoutre.

Selon un autre aspect, un tel composant comporte en outre des moyens de stabilisation, par exemple au moins un bras auxiliaire de stabilisation de la micropoutre.

Un tel composant peut comporter au moins une seconde micropoutre s'étendant suivant un deuxième axe sensiblement perpendiculaire à l'axe focal de la microlentille.

En particulier, la microlentille peut être fixée à l'extrémité de deux micropoutres.

Selon une variante, c'est une des extrémités de la première micropoutre qui est fixée sur une seconde micropoutre.

Des moyens pour la commande électrostatique du déplacement d'une des deuxièmes micropoutres peuvent être prévus, par exemple déposés le long de cette deuxième micropoutre.

Selon un autre aspect, la microlentille est reliée à au moins un micropeigne électrostatique.

L'invention a également pour objet un microdéflecteur optomécanique tel que défini dans la revendication 14.

Selon un autre aspect de l'invention, ce microdéflecteur comporte une source de rayonnement constituée d'un microlaser.

L'association d'un composant microoptique tel que décrit ci-dessus, et d'un microlaser, permet d'obtenir un niveau très élevé d'intégration, le microdéflecteur obtenu étant de taille très réduite.

Par ailleurs, un tel dispositif est compatible avec les techniques de fabrication collectives.

Une des lentilles de la paire de microlentilles peut être fixée sur la face de sortie de la cavité microlaser.

La paire de lentilles peut être du type afocal.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1A et 1B représentent un premier mode de réalisation d'un composant microoptique selon la présente invention,
- les figures 2A et 2B représentent deux autres modes de réalisation d'un composant microoptique selon la présente invention,
- les figures 3 et 4 représentent deux autres modes de réalisation d'un composant selon la présente invention,
- la figure 5A illustre des données pour le calcul de la déviation d'une poutre à force normale, dans le cas d'une structure en peigne,
- les figures 5B à 5D illustrent d'autres modes de réalisation d'un composant microoptique selon l'invention, avec peigne électrostatique,
- les figures 6A à 6F représentent des étapes de fabrication à composants microoptiques selon la présente invention,
- les figures 7A et 7B représentent, respectivement, en vue de dessus et en coupe AA, un microdéflecteur optomécanique selon la présente invention,
- la figure 8 représente un exemple de données de déflexion d'une microlentille.

Description détaillée de modes de réalisation de l'invention

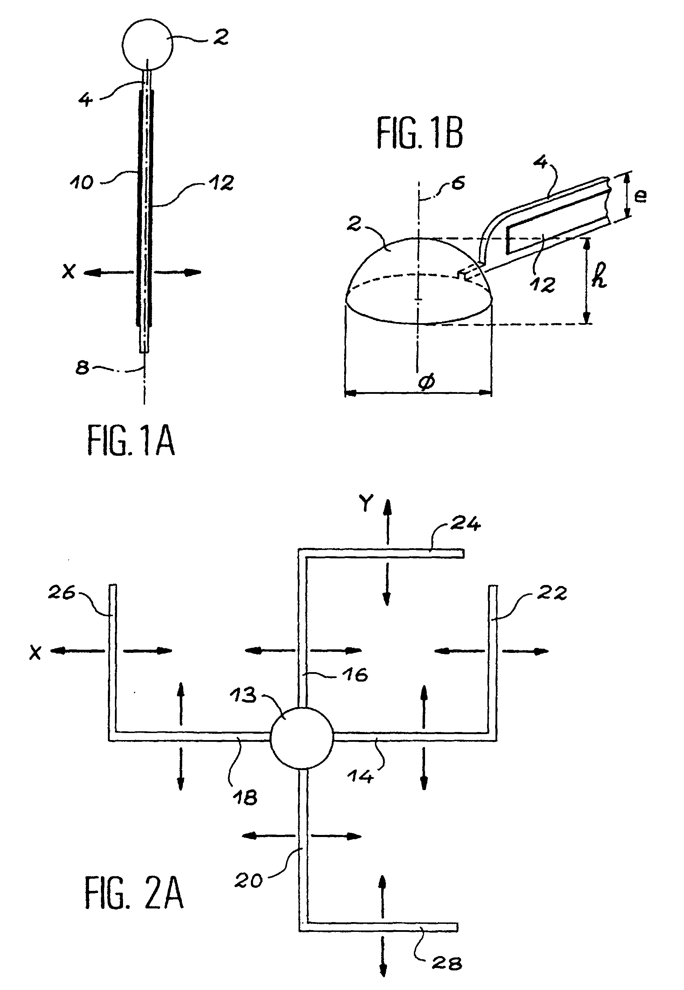

Un premier mode de réalisation de l'invention est illustré sur les figures 1A et 1B. Sur ces figures, la référence 2 désigne une microlentille dont l'axe focal est perpendiculaire au plan de la figure 1A et est repéré par la référence 6 sur la figure 1B. Le composant microoptique selon ce premier mode de réalisation comporte également une micropoutre 4 à laquelle est fixée la microlentille 2, cette micropoutre s'étendant suivant un axe 8 sensiblement perpendiculaire à l'axe 6 de la microlentille. Typiquement, pour un tel microcomposant, la microlentille présente une hauteur h de l'ordre du micromètre (par exemple comprise entre 1 et 25μm) et un diamètre Φ de l'ordre de quelques dizaines de micromètres (par exemple compris entre 50 et 100μm). Quant à la poutre, elle possède typiquement une épaisseur e de l'ordre de quelques micromètres à quelques dizaines de micromètres (par exemple 25μm), une largeur 1 de quelques μm (par exemple environ 5 μm), et une longueur de l'ordre de quelques millimètres.

La microlentille et la micropoutre sont avantageusement constituées du même matériau, par exemple en silice. Selon un autre mode de réalisation, des dépôts métalliques 10, 12 sont réalisés de part et d'autre de la micropoutre, le long de celle-ci, ces dépôts métalliques permettant une commande électrostatique du déplacement du microcomposant. Le déplacement d'un tel composant ne nécessite alors qu'une faible tension de commande, de l'ordre de quelques dizaines de volts, en tout cas inférieure à 100 volts.

Le mode de réalisation décrit en relation avec les figures 1A et 1B est un système pendulaire qui permet de déplacer la microlentille suivant une direction.

La micropoutre est donc un système élastique : lorsque la tension de commande électrostatique est ramenée à zéro, la micropoutre revient dans sa position initiale.

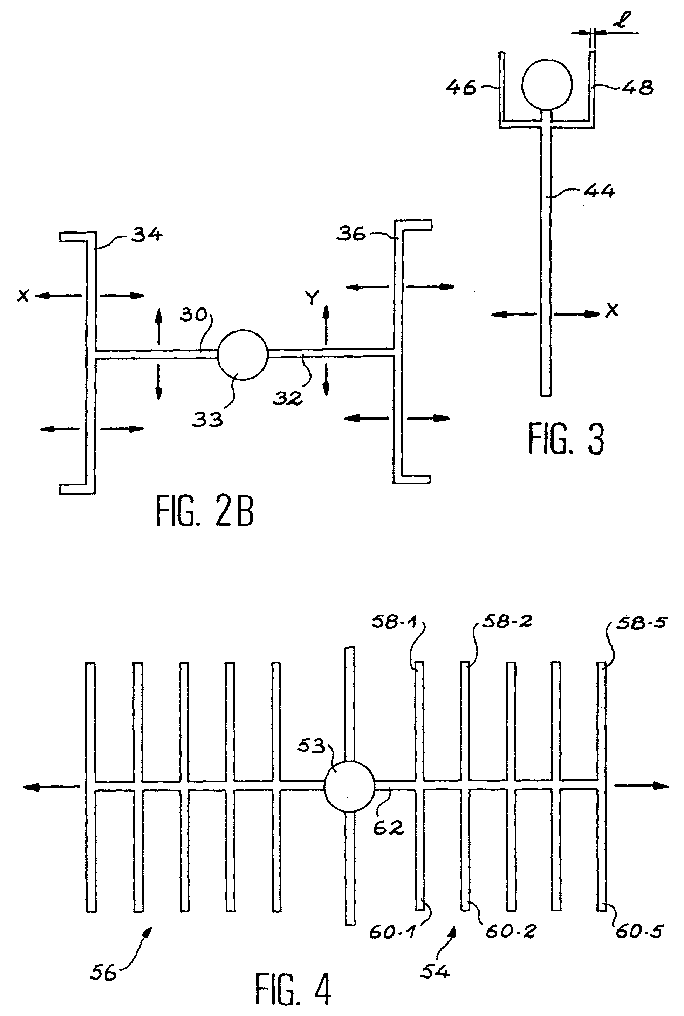

Il est possible de réaliser des systèmes plus complexes, tels que ceux illustrés sur les figures 2A et 2B, comportant plusieurs micropoutres 14, 16, 18, 20, 22, 24, 26, 28 (figure 2A) et 30, 32, 34, 36 (figure 2B). Dans tous les cas, le composant plus complexe comporte au moins une deuxième micropoutre s'étendant suivant un second axe sensiblement perpendiculaire à l'axe focal de la microlentille. Ce dernier est, sur les figures 2A et 2B, perpendiculaire au plan des figures. La microlentille 13 peut être fixée à l'extrémité d'au moins deux micropoutres 14, 16. Par ailleurs, une des extrémités d'une micropoutre 14, 16, 18, 20, 30, 32 à laquelle est directement reliée la microlentille 13, 33, peut être elle-même reliée à une micropoutre 22, 24, 26, 28, 34, 36 qui lui est sensiblement perpendiculaire. Chacune des micropoutres peut être recouverte d'un dépôt de métallisation qui permet un déplacement électrostatique. Ainsi, on peut obtenir un déplacement bidimensionnel (X, Y) d'une microlentille 13, 33, comme illustré par les flèches sur les figures 2A et 2B. Par ailleurs, sur ces figures, ont été représenté une pluralité de poutres. Cependant, il est clair que l'enseignement de l'invention recouvre également les modes de réalisations dans lesquels, par exemple, seules les poutres 14 et 22 de la figure 2A sont présentes (la lentille 13 étant reliée à la poutre 14), ou bien seules les micropoutres 32, 36 de la figure 2B sont présentes (la microlentille 33 étant reliée à la micropoutre 32), ainsi que toute autre variante comportant un nombre quelconque de micropoutres.

En outre, la micropoutre présente en général un aspect symétrique par rapport à son axe (référence 8 sur la figure 1A) et les dépôts de métallisation peuvent être réalisés de part et d'autre de la micropoutre. Cependant, l'invention couvre également les modes de réalisation dans lesquels un dépôt de métallisation est effectué sur un seul des côtés de la micropoutre. La réalisation d'une métallisation sur chacun des côtés de la micropoutre présente l'avantage de permettre d'appliquer une tension de commande pour la déviation électrostatique de la poutre, de chaque côté de celle-ci, ce qui multiplie par un facteur 2 la valeur maximale de la déflexion obtenue avec une même tension.

Selon un autre mode de réalisation, illustré sur la figure 3, et dans le but de rigidifier la poutre principale 44, il est possible de relier cette dernière à des bras 46, 48 auxiliaires de stabilisation. Ces bras permettent de corriger un désalignement de la poutre principale dans le sens de son épaisseur, c'est-à-dire suivant une direction perpendiculaire au plan de la figure 3. Ce désalignement peut se produire sous l'effet de contraintes mécaniques, et notamment de contraintes internes à la poutre 44. Ce type de contrainte interne apparaît en particulier lorsque la poutre 44 est obtenue par gravure d'une couche de silice, comme on le verra ultérieurement.

Les deux bras 46, 48 sont destinés à relier l'extrémité de la poutre 44 à une structure fixe.

La géométrie des bras compensateurs peut être envisagée de diverses façons. Néanmoins, les bras doivent être rigides dans le sens vertical (direction perpendiculaire au plan de la figure 3) et souples dans le sens horizontal (plan de la figure 3). On peut jouer sur la géométrie des bras en augmentant le facteur de forme hauteur/largeur, la hauteur h étant la hauteur de la section du bras compensateur dans une coupe verticale (suivant un plan perpendiculaire au plan de la figure 3), et la largeur l étant repérée sur la figure 3. En jouant sur ce facteur de forme, on peut obtenir une souplesse suffisante, dans le plan de la figure 3, pour ne pas entraver les déplacements de la poutre dans ce même plan et une rigidité suffisante, suivant la direction perpendiculaire pour limiter les déformations de la poutre suivant cette même direction.

Sur la figure 3, chaque bras 46, 48 est approximativement en forme d'équerre avec deux segments sensiblement perpendiculaires l'un à l'autre.

Selon un autre mode de réalisation, les bras sont droits ou de forme droite.

Chaque bras peut aussi être constitué d'un corps en "U", une branche étant rajoutée à l'extrémité libre et de manière sensiblement perpendiculaire à chaque branche latérale de "U". L'extrémité libre d'une de ces branches est reliée à la poutre 44, l'extrémité libre de l'autre branche est reliée à une structure fixe. Il en va de même pour le deuxième bras compensateur.

Dans tous les cas, on peut jouer sur le rapport de forme hauteur/largeur de la section de chaque bras, de façon à lui donner la rigidité désirée dans le sens vertical et la souplesse souhaitée dans le plan horizontal.

Le système peut aussi fonctionner avec un seul bras compensateur. Néanmoins, un mode préféré de réalisation est celui où le système est symétrique dans le plan horizontal (comme sur la figure 3, par rapport à un plan médian perpendiculaire au plan de la figure 3 et passant par l'axe de la poutre 44). D'une façon plus générale, si la partie mobile dont on veut corriger les déformations présente une certaine symétrie spatiale, il est souhaitable que le système de compensation présente la même symétrie. Cette géométrie permet d'éviter les petites déformations latérales qui pourraient apparaître par flambage des bras de stabilisation du fait que la silice, ou le matériau constitutif de la partie mobile, se trouve globalement en compression.

Un autre moyen pour rigidifier la poutre principale, afin qu'elle ne se désaligne pas, est d'ajuster la contrainte des dépôts métalliques de prise de contacts électriques pour compenser la contrainte de la couche de silice.

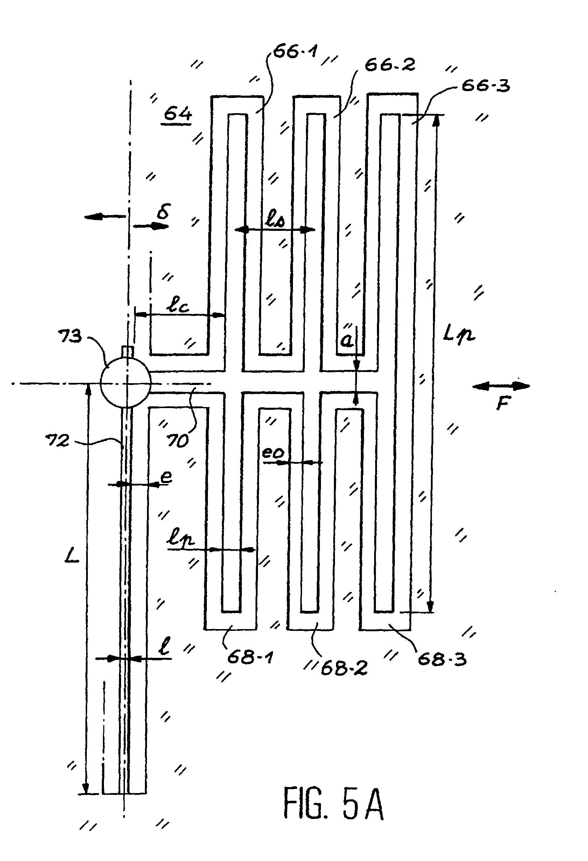

De façon à réduire encore plus la tension de commande appliquée au microdispositif, la microlentille 53 (voir figure 4) peut être reliée à au moins un micropeigne électrostatique, désigné sur la figure 4 par les références 54, 56. Chaque peigne, par exemple le peigne 54, est constitué d'une série de dents 58-1, 58-2,..., 58-5 et 60-1, 60-2,..., 60-5 reliées à une micropoutre centrale 62. Ces dents portent chacune des électrodes de commande, disposées par exemple de part et d'autre de chacune des micropoutres 58, 60. Comme illustré sur la figure 5A, ce type de peigne est inséré dans un substrat 64, présentant des encoches 66-1, 66-2, 66-3 et 68-1, 68-2, 68-3 dans lesquelles sont insérées les dents du peigne. Les parois intérieures des encoches du substrat sont recouvertes de métallisation qui font face aux métallisations déposées sur les dents du peigne, chaque métallisation du substrat formant avec une métallisation correspondante d'une dent du peigne un condensateur de diélectrique et d'épaisseur variable. Sur la figure 5A, seules six dents ont été représentées de part et d'autre d'une poutre principale 70. Cette représentation n'est pas limitative et l'enseignement de l'invention s'applique à un nombre n quelconque de dents. En reprenant les notations de la figure 5A, la déviation latérale δ de la poutre médiane 72 (laquelle porte la microlentille 73) est donnée par :

$$\delta = \frac{2L^3 \varepsilon L_p}{EI^3} \left(\frac{v}{e_0 - \delta}\right)^2 n \tag{1}$$

où E représente les modules d'Young de la silice.

Pour les valeurs suivantes des paramètres : E=7x10$^{10}$ N/m$^2$ (Pascal), L=2mm, l=5µm, h=25µm, $L_p$=2mm, $l_p$=10µm, $l_s$=0,1mm, a=10µm, $l_c$=0,2mm, ε=8,85x10$^{-12}$ F/m, $e_0$=100µm, n=5, une déviation maximale de 100µm est obtenue pour un système de commande de moyenne tension (inférieure ou égale à 100 volts), et une déviation maximale de 30µm est obtenue pour un système de commande basse tension (inférieure ou égale à 30 volts). Ceci correspond à une déflexion d'environ 12° de chaque côté, soit une déviation maximale d'environ 25°.

Par ailleurs, une condition de stabilité est de préférence à respecter pour éviter le risque que la poutre ne reste collée électrostatiquement lorsqu'elle vient toucher une paroi. Cette condition est : δ≤(1/3)e (voir figure 5A pour définition de e).

D'une façon générale, des calculs montrent que la sensibilité à l'accélération est beaucoup plus forte dans la direction parallèle au plan dans lequel se déplace la micropoutre (pour une poutre simple, c'est le plan de la figure 1A), que dans la direction perpendiculaire à ce plan, d'un facteur 30 environ.

Afin d'ajuster cette sensibilité, il suffit d'ajuster les paramètres géométriques de la poutre (épaisseur e, largeur l, pour une certaine longueur L de la poutre).

Dans le cas d'une poutre simple (sans peignes et sans bras auxiliaires de stabilisation) cette sensibilité se décompose en :

- sensibilité dans le plan de déplacement : S//=0,034 µm/ms$^{-2}$
- sensibilité perpendiculairement à ce plan : S+=0,001 µm/ms$^{-2}$.

Ces valeurs sont relativement faibles et n'induisent, pour une accélération de 1g dans la direction parallèle au plan de la poutre, qu'une déflexion parasite de l'ordre de 0,15°.

Par conséquent, un composant selon l'invention, par exemple tel que décrit ci-dessus en liaison avec l'une des figures 1A à 5A, présente une sensibilité réduite à l'environnement, par rapport aux composants selon l'art antérieur.

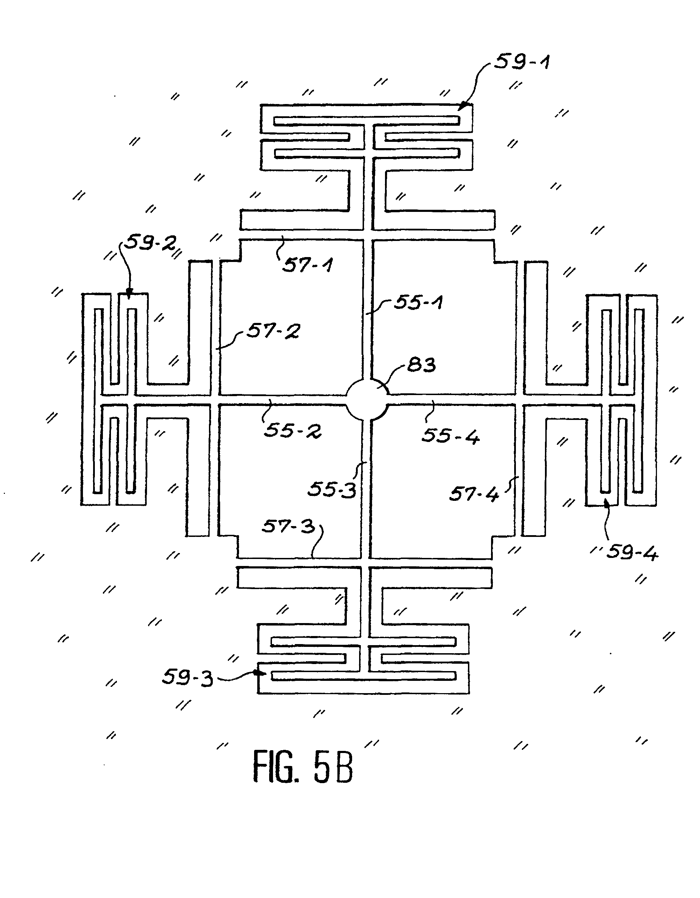

La figure 5B est un mode de réalisation dans lequel la microlentille 83 est formée à l'extrémité de 4 micropoutres 55-1, 55-2, 55-3, 55-4. Chacune de ces micropoutres est prolongée par un peigne électrostatique 59-1,..., 59-4, et l'ensemble est relié au substrat par des micropoutres transversales 57-1, ..., 57-4 qui s'étendent suivant un axe perpendiculaire à l'axe de la microlentille. Chacune de ces micropoutres transversales peut se déformer, de manière élastique, lorsqu'une déflexion est imposée par le peigne électrostatique correspondant.

Cette structure, réalisée par exemple en SiO$_2$, permet d'éviter les légères déformations des peignes (par exemple légères inclinaisons des peignes mobiles par rapport aux peignes fixes). Elle réduit ainsi les risques de court-circuit par contact entre les types de peignes. Elle permet également de réduire les mouvements parasites de la lentille, dans la direction perpendiculaire à la force appliquée. Enfin, cette structure est également moins sensible aux accélérations auxquelles elle est soumise.

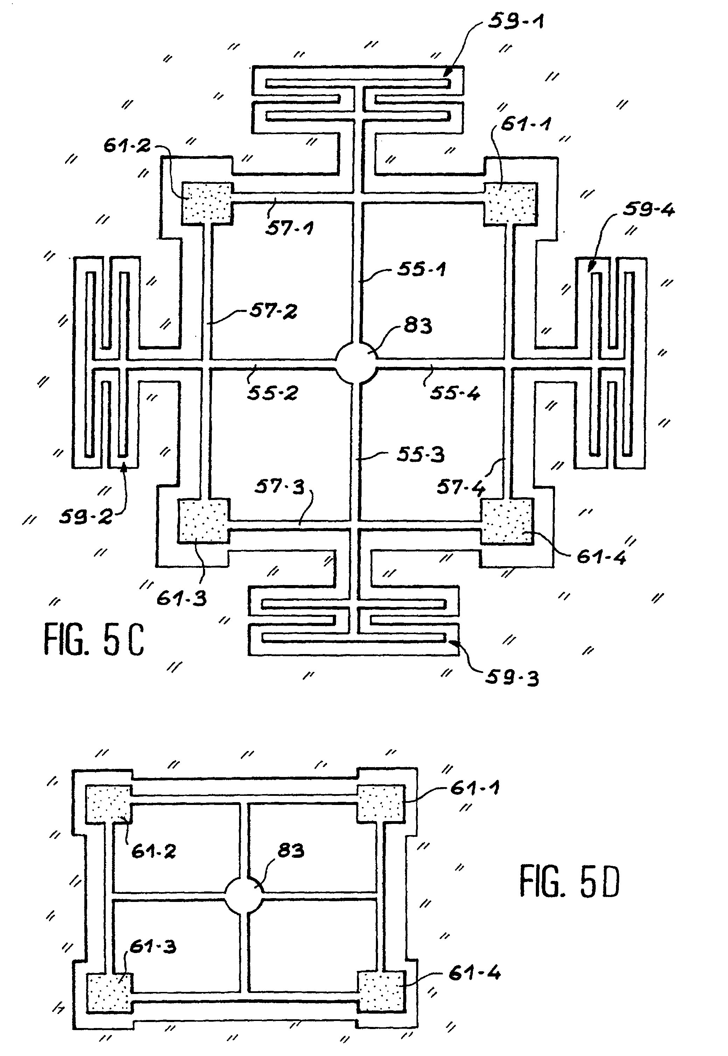

La figure 5C illustre une variante du dispositif de la figure 5B, dans laquelle les micropoutres transversales 57-1,... 57-4 ne sont pas reliées directement au substrat, mais à des plots fixes d'ancrage 61-1, ... 61-4. L'ensemble du dispositif peut être constitué en silicium dopé, pour le rendre conducteur, seuls les plots 61-1, ..., 61-4 étant isolants.

La partie mobile est ainsi isolée du reste (fixe) du composant. Ceci permet l'application des forces électrostatiques en utilisant le matériau Si dopé de la partie mobile et de la partie fixe, sans qu'il soit nécessaire dans ce cas de déposer des électrodes, comme dans les cas précédents.

La figure 5D illustre un dispositif simplifié où le peigne précédent est réduit à une face.

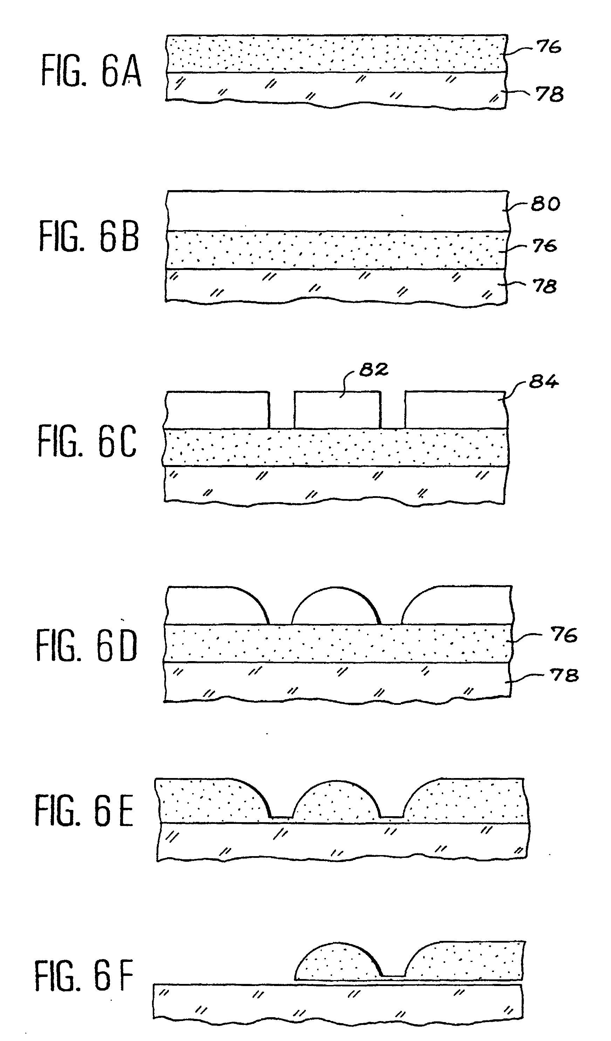

Un procédé de fabrication de la microlentille et des micropoutres correspondantes va maintenant être décrit. On prendra l'exemple d'éléments réalisés en silice, le matériau de départ 76 étant préalablement déposé sur un substrat 78 en silicium (figure 6A). Un dépôt d'une couche 80 de résine est ensuite effectué sur la couche de silice (figure 6B). Par une technique de photolithographie classique, on forme ensuite des cylindres 82 de résine photosensible à la surface du substrat, ainsi que des éléments 84 ayant une forme correspondant à celle des micropoutres que l'on désire réaliser. L'ensemble est ensuite chauffé : les plots de résine fondent et se transforment, sous l'action des tensions de surface, en gouttes sphériques qui se solidifient sous la même forme lorsque la plaque refroidit (voir figure 6D). De manière alternative, il est possible de réaliser une insolation et un développement de la résine photosensible par une technique de masque à densité variable. Une étape suivante (figure 6E) permet de graver les micropoutres et les microlentilles dans la couche de silice 76. Pour cette étape, on peut utiliser une technique de gravure ionique réactive (RIE) : les gaz (par exemple CHF$_3$ pour la silice, O$_2$ pour la résine) réagissent avec les matériaux à graver, pour former des composés volatils qui sont évacués par pompage. Le contrôle des proportions de ces gaz permet de choisir la sélectivité S de la gravure, qui est le rapport des vitesses de gravure du substrat et du masque en résine. On peut ainsi corriger la forme des lentilles, pour réduire ou augmenter leur rayon de courbure.

Une étape ultérieure (figure 6F) de gravure isotrope de la couche de silicium 78 permet de libérer l'ensemble microlentille-micropoutre, formant ainsi le composant microoptique ayant la forme voulue. Cette forme peut être quelconque, et la technique décrite ci-dessus permet d'obtenir les différents composants déjà décrits en liaison avec les figures 1A à 4, ainsi que toute structure de poutres, quelle que soit la forme de cette structure.

Les contacts électriques sont obtenus par évaporation sous incidence oblique au travers d'un masque mécanique.

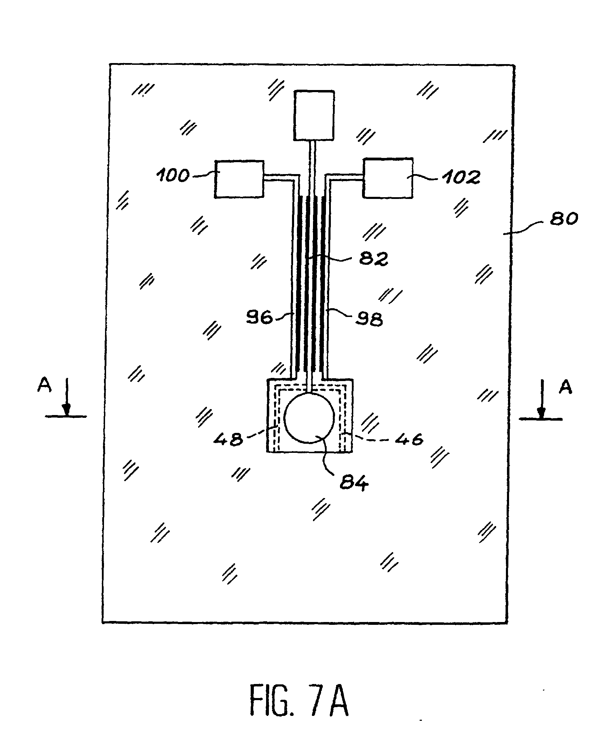

L'utilisation d'un composant microoptique constitué d'une microlentille et d'une micropoutre va maintenant être décrite, dans le cas d'un microdéflecteur optomécanique. Un tel déflecteur est représenté schématiquement sur les figures 7A (vue de dessus) et 7B (vue de côté, en coupe suivant la ligne A-A de la figure 7A). Sur ces figures, la référence 80 désigne une couche, par exemple en silice, dans laquelle une micropoutre 82 et une microlentille 84 ont été gravées, par exemple suivant la technique qui a été exposée ci-dessus en liaison avec les figures 6A-6F. Lorsque des bras de stabilisation 46, 48 (figure 3) sont utilisés, une de leurs extrémités est reliée à la poutre 82, tandis que l'autre extrémité est reliée au substrat fixe 80.

La couche 80 a une épaisseur qui peut être par exemple de l'ordre de 25μm. Elle repose sur un substrat 86, par exemple en silicium, dont l'épaisseur peut être de quelques centaines de micromètres, par exemple 500μm. Ce substrat est gravé par attaque chimique anisotrope de façon à dégager une ouverture 88 qui permet la propagation d'un faisceau 90 d'une source de rayonnement. Cette source peut être une source laser, par exemple un microlaser. Le faisceau laser 90 peut alors se propager entre la face de sortie 92 d'un microlaser 94 et la microlentille 84. La position de cette dernière peut être par exemple modifiée par un système de commande électrostatique, si des métallisations sont déposées de part et d'autre de la micropoutre 82 ; chaque métallisation est alors associée à une métallisation correspondante 96, 98 déposée sur la partie fixe de la couche de silice. Les métallisations 96, 98 sont elles-mêmes reliées à des électrodes de commande 100, 102. Un tel système permet donc d'obtenir, dans le plan du substrat 80, une oscillation pendulaire de l'ensemble constitué de la micropoutre et de la microlentille.

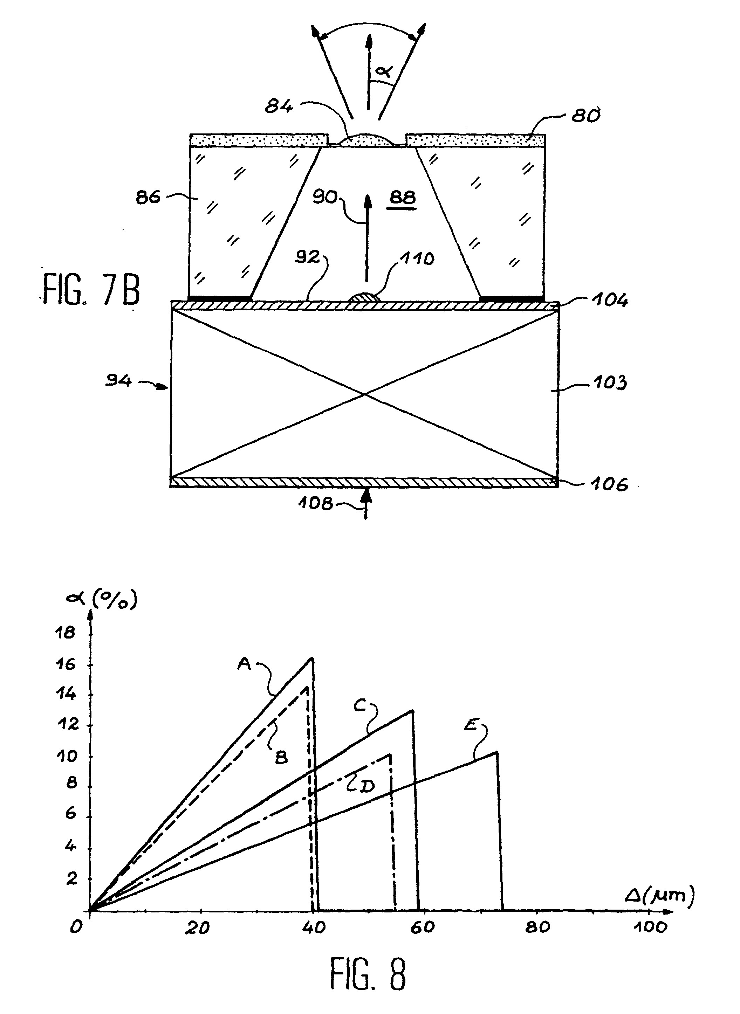

Le microlaser 94 présente une structure constituée d'un empilement de multicouches. Le milieu actif laser 103 est constitué par un matériau de faible épaisseur (entre 150μm et 1mm) et de petites dimensions (quelques millimètres carrés), sur lequel des miroirs diélectriques 104, 106 sont directement déposés, réalisant ainsi une cavité microlaser. Le milieu actif 103 peut être pompé par une diode laser III-V qui est soit directement hybridée sur le microlaser, soit couplée à ce dernier par une fibre optique. Le faisceau de pompage est désigné sur la figure 7B par la référence 108. Ce type de microlaser présente la possibilité d'une fabrication collective utilisant les moyens de la microélectronique et autorise une production de masse à très faible coût. Un microlaser est par exemple décrit dans l'article de N. Mermilliod et al., intitulé "LaMgAl$_{11}$O$_{19}$:Nd microchip laser" paru dans Applied Physics Letters, vol. 59, N° 27, p. 3519-3520 (1991) ou dans l'article de J.J. Zayhowski intitulé "Microchip lasers", paru dans The Lincoln Laboratory Journal, Vol. 3, N°3, p. 427-445 (1990). Sur le miroir de sortie 104 est déposé une seconde microlentille 110, qui reste fixe par rapport au microlaser. La formation de cette microlentille met en oeuvre des techniques similaires à celles qui ont été exposées ci-dessus pour la fabrication de la microlentille mobile. Une couche de silice est préalablement déposée sur un substrat constitué du matériau laser, et une couche de résine est ensuite déposée sur cette couche de silice. Par photolithographie, un cylindre de résine photosensible est formé, qui est ensuite chauffé, qui fond et qui se transforme, sous l'action des tensions de surface, en une goutte sphérique. Cette dernière se solidifie lors du refroidissement. Par usinage ionique, la plaque de silice est soumise à un bombardement d'ions qui érode progressivement sa surface, pour ne laisser finalement subsister que la microlentille en silice.

Les deux microlentilles sont de préférence disposées de façon à constituer un système afocal, la distance entre ces deux lentilles étant déterminée pour correspondre à l'épaisseur du substrat de silicium 86. Selon un exemple, la lentille fixe (déposée sur le microlaser) présente une distance focale $f_1$ = 375μm, un diamètre $\Phi_1$ = 50μm, et une hauteur $h_1$ = 1,82μm, un rayon de courbure $RC_1$=172,5 μm et un indice n=1,46, tandis que la microlentille mobile présente les caractéristiques données dans la colonne A du tableau I ci-dessous (la condition $f_1 + f_2 = L$ = distance inter lentilles est satisfaite). Pour un déplacement Δ=30μm de la microlentille 84 mobile, une déflexion du faisceau laser de sortie est obtenue, qui vaut : $\alpha$=arctg($\Delta/f_2$)≃12,5°.

Le tableau I suivant donne, dans chacune de ces colonnes, les caractéristiques de cinq microlentilles mobiles A, B, C, D, E. Pour chacune de ces microlentilles, l'angle de déflexion $\alpha$ (en degré) est donné sur la figure 8, en fonction du déplacement $\Delta$ (en micromètres) ($\alpha$=arctg($\Delta/f_2$) ; de plus, pour h<<$\phi_2$, on a : $f = \dfrac{\phi_2^2}{8h(n-1)}$ où n est l'indice du matériau dont est constituée la lentille).

Le microdéflecteur décrit ci-dessus ne nécessite pas l'utilisation d'un élément piézoélectrique. Par ailleurs, l'appareil obtenu intègre la source microlaser et le volume total du dispositif est très faible, puisque la distance entre le miroir d'entrée 106 du microlaser et la microlentille mobile peut être de l'ordre de 1,5mm, pour une surface de l'ordre de 20mm$^2$ (surface du substrat 80, voir figure 7A). La faible dimension et la faible masse de l'ensemble des composants les rend pratiquement insensibles à l'environnement, ce qui, ainsi qu'on l'a déjà expliqué ci-dessus, s'avère capital, dans le cas de microtélémètres lasers embarqués. Le microdéflecteur décrit ci-dessus ne met en oeuvre qu'une déflexion de la micropoutre suivant une dimension. L'utilisation de systèmes de bras plus complexes, tels que ceux illustrés en liaison avec les figures 2A et 2B permet de mettre en oeuvre des dispositifs à balayage bidimensionnel. Il est également possible d'empiler deux systèmes à une seule direction de balayage en croisant deux micropoutres à 90° sur deux niveaux de technologie, chaque micropoutre portant une microlentille à son extrémité et pouvant être commandée, par exemple par une commande électrostatique. De plus, la mise en oeuvre d'un peigne électrostatique associé à une microlentille permet de diminuer les tensions de commande, à déplacement constant de la microlentille.

TABLEAU I

| Focale $f_2$ (µm) | 135 | 150 | 250 | 300 | 400 |
|---|---|---|---|---|---|
| Diamètre $\Phi_2$ (µm) | 100 | 100 | 150 | 150 | 200 |
| Indice n | 1,46 | 1,46 | 1,46 | 1,46 | 1,46 |
| Rayon de courbure (µm) | 62.10 | 69.00 | 115.00 | 138.00 | 184.00 |
| Epaisseur µm | 25,27 | 21,45 | 27,82 | 22,16 | 29,55 |
| $\Delta_{maxi}$ (µm) | 41,00 | 40,00 | 58,33 | 55,00 | 73,33 |
| $\alpha_{maxi}$ (µm) | 16,50 | 14,57 | 13,06 | 10,20 | 10,34 |

**Revendications**

1. Composant microoptique comprenant :

   - une microlentille (2, 13, 33, 53, 73, 84) présentant un axe focal (6), et
   - une micropoutre (4 ; 14, 16, 18, 20 ; 30, 32, 44, 62, 82),

   la micropoutre s'étendant suivant un axe (8) sensiblement perpendiculaire à l'axe focal de la microlentille et pouvant subir des déformations élastiques suivant un axe sensiblement perpendiculaire à l'axe focal de la microlentille et à l'axe suivant lequel la micropoutre s'étend, **caractérisé en ce que** la microlentille et la micropoutre formant une structure monolithique réalisée dans un même matériau.

2. Composant selon la revendication 1, comportant en outre des moyens (10, 12) permettant une commande électrostatique du déplacement de la micropoutre.

3. Composant selon l'une des revendications 1 ou 2, comportant en outre des moyens (46, 48) de stabilisation de la micropoutre.

4. Composant selon la revendication 3, les moyens de stabilisation comportant au moins un bras auxiliaire (46, 48).

5. Composant selon l'une des revendications 1 à 4, comportant en outre au moins une seconde micropoutre (22, 24, 26, 28 ; 36, 34 ; 58, 60) s'étendant suivant un deuxième axe sensiblement perpendiculaire à l'axe focal de la microlentille.

6. Composant suivant la revendication 5, la microlentille étant fixée aux extrémités de deux micropoutres.

7. Composant selon l'une des revendications 5 ou 6, une des extrémités de la première micropoutre (30, 32) étant fixée sur une seconde micropoutre (34, 36).

8. Composant selon l'une des revendications 5 à 7, des moyens pour la commande électrostatique du déplacement d'une seconde micropoutre étant déposés le long de cette seconde micropoutre.

9. Composant microoptique selon l'une des revendications 1 à 8, **caractérisé en ce qu'**il comprend une série de dents (58-1, 58-2, ..., 58-5, 60-1, ..., 60-5) reliées à la micropoutre, chacune des dents portant des électrodes de commande de façon à former un micropeigne électrostatique.

10. Composánt microoptique selon l'une des revendications 1 ou 2, la microlentille (83) étant fixée aux extrémités de quatre micropoutres (55-1, 55-2, 55-3, 55-4), chaque micropoutre étant prolongée par une série de dents formant micropeigne électrostatique (59-1, 59-2, 59-3, 59-4).

11. Composant microoptique selon la revendication 10, comprenant un substrat fixe présentant des encoches dans lesquelles sont insérées les dents des micropeignes (59-1, 59-2, 59-3, 59-4), chaque micropoutre étant reliée à une micropoutre transversale (57-1, 57-2, 57-3, 57-4) dont les extrémités sont elles-mêmes reliées au substrat.

**12.** Composant microoptique selon la revendication 10, comprenant un substrat fixe présentant des encoches dans lesquelles sont insérées les dents du micropeignes (59-1, ..., 59-4) chaque micropoutre étant reliée à une micropoutre transversale (57-1, 57-2, 57-3, 57-4) dont les extrémités sont elles-mêmes reliées à des plots fixes (61-1, 61-2, 61-3, 61-4).

**13.** Composant selon la revendication 12, les plots étant électriquement isolants, les micropoutres et le substrat fixe étant conducteurs.

**14.** Microdéflecteur optomécanique comprenant une paire de microlentilles (84, 110), **caractérisé en ce qu'**une des microlentilles (84) est mobile et fait partie d'un composant selon l'une des revendications 1 à 13.

**15.** Microdéflecteur selon la revendication 14, la microlentille mobile (84), et le composant dont elle fait partie, étant obtenus par gravure d'un substrat dans le plan duquel ledit composant est mobile.

**16.** Microdéflecteur optomécanique selon l'une des revendications 14 ou 15, **caractérisé en ce qu'**il comprend une source de rayonnement de type microlaser à cavité (94).

**17.** Microdéflecteur optomécanique selon la revendication 16, une des microlentilles (110) de la paire de microlentilles étant fixée sur la face de sortie (92) de la cavité microlaser.

**18.** Microdéflecteur optomécanique selon l'une des revendications 14 à 17, la paire de microlentilles étant du type afocal.


**Patentansprüche**

**1.** Mikrooptisches Bauteil, umfassend:

- eine Mikrolinse (2, 13, 33, 53, 73, 84) mit einer Fokalachse (6), und
- einen Mikroträger (4; 14, 16, 18, 20; 30, 32, 44, 62, 82),

wobei der Mikroträger sich entsprechend einer zu der Fokalachse der Mikrolinse im Wesentlichen senkrechten Achse (8) erstreckt und elastisch verformbar ist entsprechend einer Achse, die zu der Fokalachse der Mikrolinse und zu der Achse, entsprechend der sich der Mikroträger erstreckt, im Wesentlichen senkrecht ist,
**dadurch gekennzeichnet,**
**dass** die Mikrolinse und der Mikroträger eine monolithische Struktur bilden, aus ein und demselben Material bestehend.

**2.** Bauteil nach Anspruch 1, das außerdem Einrichtungen (10, 12) umfasst, die eine elektrostatische Steuerung der Bewegung bzw. Verschiebung des Mikroträgers ermöglichen.

**3.** Bauteil nach einem der Ansprüche 1 oder 2, das außerdem Einrichtungen (46, 48) zur Stabilisierung des Mikroträgers umfasst.

**4.** Bauteil nach Anspruch 3, wobei die Stabilisierungseinrichtungen wenigstens einen Hilfsarm (46, 48) umfassen.

**5.** Bauteil nach einem der Ansprüche 1 bis 4 mit außerdem wenigstens einem zweiten Mikroträger (22, 24, 26, 28; 36, 34; 58, 60), der sich entsprechend einer zweiten, zu der Fokalachse der Mikrolinse senkrechten Achse erstreckt.

**6.** Bauteil nach Anspruch 5, bei dem die Mikrolinse an den Enden der beiden Mikroträger befestigt ist.

**7.** Bauteil nach einem der Ansprüche 5 oder 6, wobei eines der Enden des ersten Mikroträgers (30, 32) an einem zweiten Mikroträger (34, 36) befestigt ist.

**8.** Bauteil nach einem der Ansprüche 5 bis 7, bei dem die Einrichtungen zur elektrostatischen Steuerung der Verschiebung bzw. Bewegung eines zweiten Mikroträgers längs dieses zweiten Mikroträgers abgeschieden werden.

**9.** Mikrooptisches Bauteil nach einem der Ansprüche 1 bis 8, **dadurch gekennzeichnet, dass** es eine Serie von Zähnen (58-1, 58-2, ..., 58-5, 60-1, ..., 60-5) umfasst, die mit dem Mikroträger verbunden sind, wobei jeder der Zähne Steuerelektroden trägt, um einen elektrostatischen Mikrokamm zu bilden.

**10.** Mikrooptisches Bauteil nach einem der Ansprüche 1 oder 2, wobei die Mikrolinse (83) an den Enden von vier Mikroträgem (55-1, 55-2, 55-3, 55-4) befestigt ist und jeder Mikroträger verlängert wird durch eine Serie von einen Mikrokamm bildenden Zähnen (59-1, 59-2, 59-3, 59-4).

**11.** Mikrooptisches Bauteil nach Anspruch 10 mit einem festen Substrat, das Aussparungen aufweist, in die die Zähne der Mikrokämme (59-1, 59-2, 59-3, 59-4) eingesetzt sind, wobei jeder Mikroträger mit einem Mikroquerträger (57-1, 57-2, 57-3, 57-4) verbunden ist, dessen Enden selbst mit dem Substrat verbunden sind.

**12.** Mikrooptisches Bauteil nach Anspruch 10 mit einem festen Substrat, das Aussparungen aufweist, in die die Zähne der Mikrokämme (59-1, ..., 59-4) eingesetzt sind, wobei jeder Mikroträger mit einem Mikroquerträger (57-1, 57-2, 57-3, 57-4) verbunden ist, dessen Enden selbst mit festen Elementen (61-1, 61-2, 61-3, 61-4) verbunden sind.

**13.** Bauteil nach Anspruch 12, wobei die genannten Elemente elektrisch isolierend sind und die Mikroträger und das feste Substrat leitend sind.

**14.** Optomechanischer Mikro-Strahlablenker mit einem Paar Mikrolinsen (84, 110), **dadurch gekennzeichnet, dass** eine der Mikrolinsen (84) beweglich ist und Teil eines Bauteils nach einem der Ansprüche 1 bis 13 ist.

**15.** Optomechanischer Mikro-Strahlablenker nach Anspruch 14, wobei man die bewegliche Mikrolinse (84) und das Bauteil, von dem sie ein Teil ist, durch das Ätzen eines Substrats erhält, in dessen Ebene das genannte Bauteil beweglich ist.

**16.** Optomechanischer Mikro-Strahlablenker nach einem der Ansprüche 14 oder 15, **dadurch gekennzeichnet, dass** er eine Strahlungsquelle des Typs Mikrolaser mit Resonator (94) umfasst.

**17.** Optomechanischer Mikro-Strahlablenker nach Anspruch 16, wobei eine der Mikrolinsen (110) des Mikrolinsenpaars auf der Ausgangsfläche (92) des Mikrolaserresonators befestigt ist.

**18.** Optomechanischer Mikro-Strahlablenker nach einem der Ansprüche 14 bis 17, wobei das Mikrolinsenpaar vom brennpunktlosen Typ ist.

**Claims**

**1.** Microoptical component comprising a microlens (2, 13, 33, 53, 73, 84) having a focal axis (6) and a microbeam (4, 14, 16, 18, 20, 30, 32, 44, 62, 82), the microbeam extending along an axis (8) substantially perpendicular to the focal axis of the microlens and being able to undergo elastic deformations in accordance with an axis substantially perpendicular to the focal axis of the microlens and to the axis along which the microbeam extends, **characterized in that** the microlens and the microbeam form a monolithic structure produced in the same material.

**2.** Component according to claim 1 having means (10, 12) permitting the electrostatic control of the microbeam displacement.

**3.** Component according to either of the claims 1 and 2, also having microbeam stabilization means (46, 48).

**4.** Component according to claim 3, the stabilization means having at least one auxiliary arm (46, 48).

**5.** Component according to one of the claims 1 to 4, also having at least one second microbeam (22, 24, 26, 28; 36, 34; 58, 60) extending along a second axis substantially perpendicular to the focal axis of the microlens.

**6.** Component according to claim 5, the microlens being fixed to the ends of two microbeams.

**7.** Component according to claim 5 or 6, one of the ends of the first microbeam (30, 32) being fixed to a second microbeam (34, 36).

8. Component according to one of the claims 5 to 7, having means permitting the electrostatic control of the displacement of a second microbeam.

9. Microoptical component according to one of the claims 1 to 8, **characterized in that** it comprises a series of teeth (58-1, 58-2, ... 58-5, 60-1, ... 60-5) connected to the microbeam, each of the teeth carrying control electrodes so as to form an electrostatic microcomb.

10. Microoptical component according to one of the claims 1 to 2, the microlens (83) being fixed to the ends of four microbeams (55-1, 55-2, 55-3, 55-4), each microbeam being extended by a series of teeth forming an electrostatic microcomb (59-1, 59-2, 59-3, 59-4).

11. Microoptical component according to claim 10 comprising a fixed substrate having notches in which are inserted the teeth of the microcombs (59-1, 59-2, 59-3, 59-4), each microbeam being connected to a transverse microbeam (57-1, 57-2, 57-3, 57-4), whereof the ends are connected to the substrate.

12. Microoptical component according to claim 10, comprising a fixed substrate having notches in which are inserted the teeth of microcombs (59-1, ..., 59-4), each microbeam being connected to a transverse microbeam (57-1, 57-2, 57-3, 57-4), whose ends are connected to fixed elements (61-1, 61-2, 61-3, 61-4).

13. Component according to claim 12, the elements being electrically insulating, the microbeams and fixed substrate being conductive.

14. Optomechanical microdeflector comprising a pair of microlenses (84, 110), **characterized in that** one of said microlenses (84) is mobile and forms part of a component according to one of the claims 1 to 13.

15. Microdeflector according to claim 14, the mobile microlens (84) and the component of which it forms part being obtained by etching a substrate in the plane of which said component is mobile.

16. Optomechanical microdeflector according to either of the claims 14 or 15, **characterized in that** it comprises a radiation source of the microlaser cavity type (94).

17. Optomechanical microdeflector according to claim 16, one of the microlenses (110) of the pair of microlenses being fixed to the output face (92) of the microlaser cavity.

18. Optomechanical microdeflector according to one of the claims 14 to 17, the pair of microlenses being of the afocal type.

FIG.1B

FIG.1A

FIG. 2A

FIG. 2B

FIG. 3

FIG. 4

FIG. 5A

FIG. 5B

FIG. 5C

FIG. 5D

FIG. 6A

76
78

FIG. 6B

80
76
78

FIG. 6C

82
84

FIG. 6D

76
78

FIG. 6E

FIG. 6F

FIG. 7 A

FIG. 7B

FIG. 8